# FASCICULE DE BREVET EUROPEEN

(11) **EP 2 127 970 B1**
(45) Date de publication et mention de la délivrance du brevet: **16.03.2011**
(21) Numéro de dépôt: 09160207.8
(22) Date de dépôt: 14.05.2009
(51) Int. Cl.: B60S 1/52

(54) **Agencement pour le montage d'un cache sur un porte-gicleur**
Anordnung für die Montage einer Abdeckung auf einem Düsenhalter
Arrangement for installing a cover plate on a nozzle-holder

(30) Priorité: 26.05.2008 FR 0802855
(43) Date de publication de la demande: 02.12.2009
(73) Titulaire: Valeo Vision, 93012 Bobigny (FR)
(72) Inventeur: Duval, Christophe, 93500, PANTIN (FR); Dorn, David, 93420, VILLEPINTE (FR)

(56) Documents cités:
- DE-C1- 3 914 768
- FR-A- 2 716 425
- FR-A- 2 749 553
- FR-A- 2 873 973

## Description

La présente invention se rapporte à un agencement d'un cache sur un dispositif de nettoyage de glace, notamment de projecteur de véhicule automobile, comportant un porte-gicleur susceptible d'être monté sur un vérin télescopique.

L'invention se rapporte plus particulièrement à un agencement pour le montage d'un cache sur un dispositif de nettoyage de glace, notamment de projecteur de véhicule automobile, qui comporte :
- un porte-gicleur destiné à être monté sur un vérin escamotable dans une ouverture de la carrosserie du véhicule automobile ;
- un cache qui est susceptible d'obturer l'ouverture de la carrosserie lorsque le vérin est escamoté, et qui est destiné à être monté sur le porte-gicleur ;
- des moyens pour fixer de manière démontable le cache sur le porte-gicleur par emboîtement élastique de premiers moyens de fixation du cache dans des deuxièmes moyens de fixation de formes complémentaires du porte-gicleur.

Les dispositifs de nettoyage, appelés communément lave-projecteurs, comportent généralement une buse ou gicleur alimenté en liquide de lavage sous pression et monté fixe en avant et en dessous de la glace du projecteur. On incorpore habituellement un tel gicleur dans le bouclier ou pare-chocs avant du véhicule. Dans certaines configurations, le gicleur traverse ou est dans le projecteur même.

Il est bien connu que, pour obtenir une efficacité de lavage maximale, le gicleur doit être situé aussi loin que possible en avant de la glace, de manière à ce que les gouttelettes de liquide frappent la glace avec un angle d'incidence aussi élevé que possible par rapport au plan de ladite glace.

En outre, la tendance actuelle est de proposer des projecteurs avec des glaces de fermeture inclinées de manière à épouser la forme plongeante de l'avant des véhicules, ce qui nécessite un éloignement des gicleurs vers l'avant encore plus important.

Il est connu d'incorporer de tels gicleurs à des butoirs fixes rapportés sur l'avant des pare-chocs, ce qui cause des inconvénients en matière de sécurité, d'aérodynamisme et d'esthétique.

Une solution connue pour éviter ces inconvénients consiste à proposer un porte-gicleur escamotable à l'intérieur d'une ouverture pratiquée dans la carrosserie du véhicule. Un tel dispositif de nettoyage comporte un vérin télescopique dont une tige intérieure mobile porte à son extrémité libre le porte-gicleur.

La chambre intérieure du vérin est alimentée directement par l'arrivée du liquide de lavage, et la pression dudit liquide provoque l'actionnement du vérin depuis une position escamotée à l'intérieur de la carrosserie jusqu'à une position étendue en dehors de la carrosserie dans laquelle le gicleur est agencé en vis-à-vis de la glace du projecteur. Puis, le liquide sous pression alimente le gicleur pour effectuer le nettoyage de la glace par aspersion de liquide.

Pour des raisons d'esthétique, il est connu de munir le porte-gicleur d'un cache, parfois appelé enjoliveur ou pièce de style, de façon à ce que, en position escamotée du vérin, le cache vienne obturer l'ouverture pratiquée dans la carrosserie, notamment dans le pare-chocs, en s'adaptant à ses contours et en adoptant généralement la couleur et l'aspect de l'élément dans lequel le cache est insérée.

Un tel cache est par exemple (voir FR-A-2749553) monté sur le porte-gicleur par des moyens de fixation par emboîtement élastique de formes complémentaires. Un tel montage est en effet économique et rapide à effectuer.

Cependant, on a constaté que dans certaines situations le cache se désolidarise du porte-gicleur, par exemple après un choc léger. En l'absence du cache, l'ouverture de la carrosserie reste béante lorsque le vérin est dans sa position escamotée. Ceci est préjudiciable pour l'aspect esthétique du véhicule. En outre, le gicleur ainsi exposé en permanence à des projections de poussières, risque d'être encrassé et de ne plus pouvoir fournir un jet adéquat pour le nettoyage de la glace.

En outre, en cas d'intervention de maintenance ou de réparation sur le véhicule, il est avantageux de pouvoir démonter facilement le cache afin qu'un opérateur puisse effectuer ses opérations de maintenance sans abîmer le cache.

Cependant, le cache est une pièce apparente qui peut tenter les voleurs. Pour éviter les vols, il est donc aussi préférable que le cache ne soit pas démontable trop facilement.

L'invention propose un agencement pour le montage sur un dispositif de nettoyage de glace, notamment de projecteur de véhicule automobile, qui comporte :
- un porte-gicleur destiné à être monté sur un vérin escamotable dans une ouverture de la carrosserie du véhicule automobile ;
- un cache qui est susceptible d'obturer l'ouverture de la carrosserie lorsque le vérin est escamoté, et qui est destiné à être monté sur le porte-gicleur ;
- des moyens pour fixer de manière démontable le cache sur le porte-gicleur par emboîtement élastique de premiers moyens de fixation du cache dans des deuxièmes moyens de fixation de formes complémentaires du porte-gicleur.

Dans cet agencement selon la présente invention, l'un des moyens de fixation est formé par une douille taraudée et l'autre des moyens de fixation est formé par une tige filetée, l'un des moyens de fixation étant fendu axialement depuis son bord d'extrémité libre en au moins deux languettes axiales, la distance entre les extrémités des deux languettes pouvant varier radialement par flexion élastique, de manière à permettre l'emboîtement axial dans la douille par écartement du filetage de la tige du taraudage de la douille.

Selon d'autres caractéristiques de l'invention :
- le cache est destiné à être démonté du porte-gicleur par application d'un couple de dévissage de la tige filetée par rapport à la douille taraudée ;
- les premiers et deuxièmes moyens de fixation comportent des moyens d'indexation angulaire du cache par rapport au porte-gicleur ;
- préférentiellement la douille taraudée est fendue axialement depuis son bord d'extrémité libre en au moins deux languettes axiales susceptibles d'être écartées radialement l'une de l'autre par flexion élastique, et en ce que la tige filetée est susceptible d'être emboîtée axialement dans la douille par écartement élastique des languettes axiales de la douille taraudée ; cet écartement permet l'emboîtement axial dans la douille par écartement du filetage de la tige du taraudage de la douille ;
- la tige filetée comporte au moins deux crans destinés à recevoir le bord d'extrémité axiale libre des languettes de la douille afin d'indexer angulairement le cache par rapport au porte-gicleur ;
- les crans sont délimités circonférentiellement par des dents dont chacune comporte une face axiale de butée qui s'oppose à la rotation de la douille dans le sens du vissage par rapport à la tige filetée lorsque le cache est monté sur le porte-gicleur ;
- les dents comportent une face opposée à cette face axiale et formant une rampe radiale, notamment inclinée de manière à pousser axialement le filetage de la tige filetée contre le taraudage de la douille taraudée lors du dévissage, notamment

pour former un couple résistant par frottement à l'encontre du couple de dévissage lors du démontage du cache ;
- les filets de la douille taraudée et de la tige filetée présentent en coupe axiale un profil à dents triangulaires comportant une face latérale qui est tournée vers l'extrémité libre de la tige filetée et qui est inclinée, notamment pour faciliter la flexion élastique des languettes de la douille taraudée lors du montage par insertion axiale ;
- les filets de la douille taraudée et de la tige filetée présentent en coupe axiale un profil à dents triangulaires comportant une face opposée qui est tournée vers la base de la tige filetée et qui s'étend dans un plan radial de manière à s'opposer au retrait de la tige filetée montée par arrachage axial ;
- la douille taraudée est réalisée en matériau plastique (ou en métal) ;
- la douille taraudée forme les premiers moyens de fixation portés par le cache, et elle est réalisée venue de matière avec le cache ;
- la tige filetée est réalisée en matériau plastique ou en métal ;
- la tige filetée forme les deuxièmes moyens de fixation portés par le porte-gicleur, et elle est réalisée venue de matière avec le porte-gicleur.

D'autres caractéristiques et avantages apparaîtront au cours de la lecture de la description détaillée qui va suivre, pour la compréhension de laquelle on se reportera aux dessins annexés parmi lesquels :
- la figure 1 est une vue en perspective qui représente l'avant d'un véhicule automobile équipé de dispositifs de nettoyage réalisés selon les enseignements de l'invention ;
- la figure 2 est une vue en perspective qui représente un cache dans une position démontée par rapport à un porte-gicleur du dispositif de nettoyage de la figure 1 ;
- la figure 3 est une vue de côté qui représente le porte-gicleur et le cache de la figure 2 ;
- la figure 4 est une vue en coupe axiale selon le plan de coupe 4-4 de la figure 2 ;
- la figure 5 est une vue similaire à celle de la figure 3 qui représente le cache dans une position montée sur le porte-gicleur ;
- la figure 6 est une vue de détail à plus grande échelle qui représente le filetage de la tige filetée de la figure 3 ;
- la figure 7 est une vue de détail à plus grande échelle qui représente la dent de la tige filetée de la figure 3.

Dans la suite de la description, on adoptera de manière non limitative des orientations longitudinale dirigée d'avant en arrière, verticale dirigée de bas en haut, et transversale dirigée de gauche à droite, qui sont indiquées par le trièdre "L,V,T" des figures.

Dans la suite de la description, des éléments ayant des fonctions identiques, analogues ou similaires seront désignés par des mêmes numéros de référence.

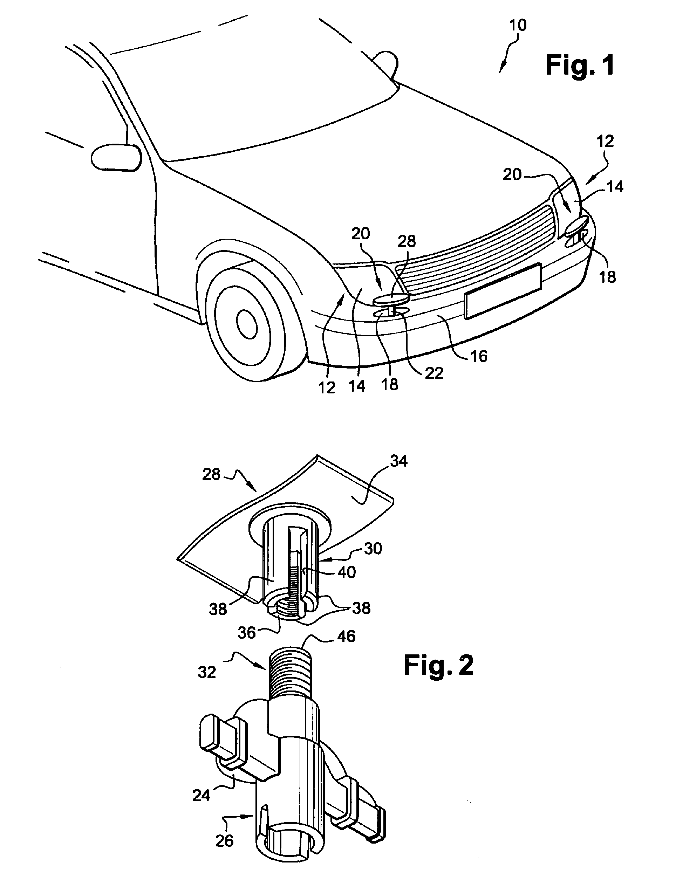

On a représenté à la figure 1 l'avant d'un véhicule automobile 10 comportant deux projecteurs avant 12 dont chacun est fermé par une glace 14 transparente. Les projecteurs 12 sont agencés au-dessus d'un pare-chocs 16 transversal avant.

Le pare-chocs 16 comporte deux ouvertures 18 qui sont agencées au droit des projecteurs 12.

Un dispositif de nettoyage 20 de la glace 14 de chacun des projecteurs 12 est agencé dans chacune des ouvertures 18. Les deux dispositifs de nettoyage 20 étant identiques, un seul de ces dispositifs de nettoyage 20 sera décrit en détail par la suite.

Le dispositif de nettoyage 20 comporte un vérin 22 télescopique comprenant une tige mobile axialement entre une position escamotée à l'intérieur du pare-chocs 16 et une position étendue dans laquelle une extrémité libre de la tige est agencée à l'extérieur du pare-chocs 16 en passant à travers l'ouverture 18 associée.

L'extrémité libre de la tige du vérin 22 porte au moins un gicleur 24 par l'intermédiaire d'un porte-gicleur 26. Dans l'exemple représenté à la figure 2, le porte-gicleur 26 est représenté en bas et il porte deux gicleurs 24.

La tige du vérin 22 est creuse de manière à raccorder, par l'intermédiaire du porte-gicleur 26, les gicleurs 24 à une source de liquide de nettoyage sous pression.

Une chambre intérieure (non représentée) du vérin 22 est alimentée directement par l'arrivée du liquide de lavage, et la pression dudit liquide provoque l'actionnement du vérin 22 depuis sa position escamotée jusqu'à sa position étendue en dehors de la carrosserie dans laquelle les gicleurs 24 sont agencés en vis-à-vis de la glace 14 du projecteur 12. Puis, le liquide sous pression alimente chaque gicleur 24 pour effectuer le nettoyage de la glace 14 par aspersion de liquide.

Un cache 28 est monté sur le porte-gicleur 26. Le cache 28 présente une forme de plaque de contour et de dimensions similaires à celles de l'ouverture 18 du pare-chocs 16 de manière à obturer l'ouverture 18 lorsque le vérin 22 est en position escamotée. Le cache 28 s'étend ici dans un plan sensiblement horizontal en présentant une forme gauche.

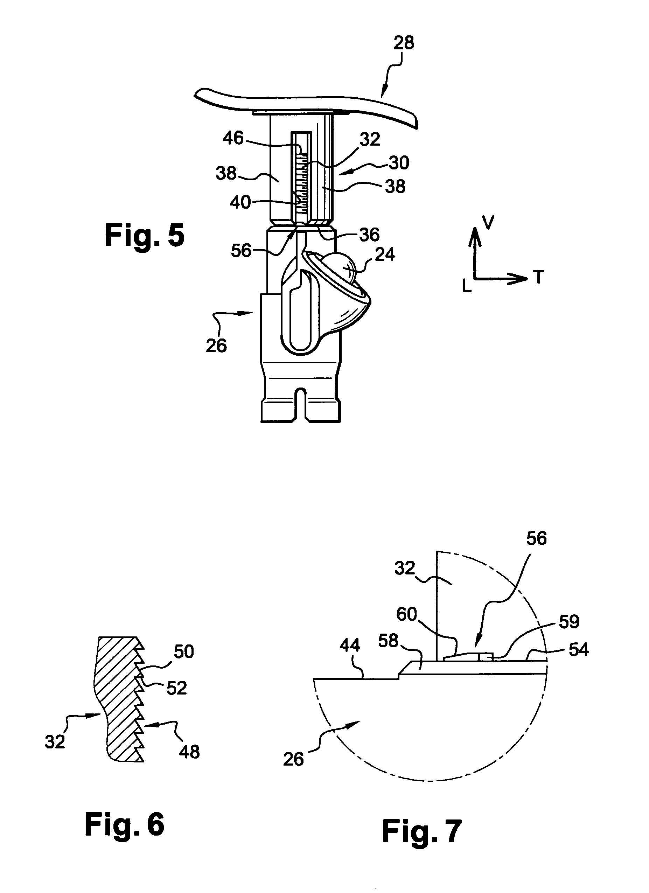

Le cache 28 est plus particulièrement une pièce qui rapportée sur le porte-gicleur 26. Le cache 28 est monté sur le porte-gicleur 26 par translation selon une direction verticale de montage, indiquée par la flèche "A" des figures 2 à 4, vers le bas depuis une position supérieure démontée, comme illustré aux figures 2 à 4, jusqu'à une position inférieure montée, comme illustrée à la figure 5.

Ainsi, le cache 28 est monté par translation depuis sa position axiale supérieure démontée jusqu'à sa position axiale inférieure montée par application d'un effort vertical de montage selon la direction de montage "A".

Le cache 28 est fixé sur le porte-gicleur 26 de manière démontable, par exemple pour permettre d'intervenir pour réparer certains organes du véhicule automobile 10 sans endommager le cache 28.

Le montage du cache 28 sur le porte-gicleur 26 est réalisé par emboîtement élastique de premiers moyens de fixation 30 appartenant au cache 28 dans des deuxièmes moyens de fixation 32 de formes complémentaires appartenant au porte-gicleur 26.

Selon un premier mode de réalisation de l'invention représenté aux figures 2 à 7, les premiers moyens de fixation 30 appartenant au cache 28 sont formés par une douille taraudée 30, c'est-à-dire une douille à filetage intérieur, qui s'étend verticalement vers le bas depuis une face inférieure 34 du cache 28 jusqu'à un bord circulaire inférieur d'extrémité libre 36.

La douille taraudée 30 est fendue axialement depuis son bord inférieur d'extrémité libre 36 en au moins deux languettes 38 axiales susceptibles d'être écartées radialement l'une de l'autre par flexion élastique. Plus particulièrement, dans les exemples représentés aux figures, la douille taraudée 30 est entaillée, depuis son bord inférieur d'extrémité libre 36, de trois fentes axiales 40 qui sont agencées régulièrement à 120° autour de l'axe vertical "B" de la douille taraudée 30 et qui délimitent circonférentiellement trois languettes 38 flexibles radialement de manière élastique à la manière de poutres élastiques encastrées à leur extrémité supérieure.

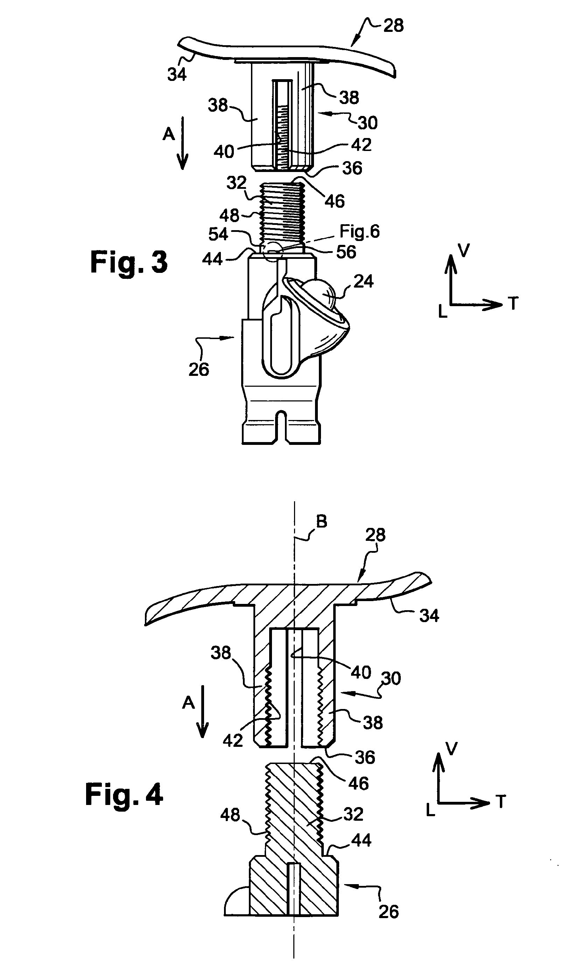

Comme représenté à la figure 4, le taraudage 42 de la douille taraudée 30, autrement dit le filetage intérieur, s'étend depuis le bord inférieur libre 36 de chaque languette 38 sur environ les deux tiers de la longueurs des languettes 38. Le taraudage 42 est ainsi agencé uniquement sur un tronçon d'extrémité libre des languettes 38 qui est susceptible d'être écarté radialement d'au moins la profondeur radiale des filets du taraudage 42 par rapport à sa position verticale de repos.

La douille taraudée 30 est réalisée en matériau plastique, par exemple un matériau thermoplastique tel que l'acrylonitrile butadiène styrène (ABS). Avantageusement, la douille taraudée 30 est réalisée venue de matière en une seule pièce avec le cache 28.

Les deuxièmes moyens de fixation 32 appartenant au porte-gicleur 26 sont formés par une tige filetée 32 qui s'étend verticalement vers le haut depuis une face d'extrémité supérieure 44 du porte-gicleur 26 jusqu'à une extrémité supérieure libre 46. La tige filetée 32 présente une forme complémentaire de celle de la douille taraudée 30 de manière que le filetage 48 de la tige filetée 32 soit susceptible d'être vissé dans le taraudage 42 de la douille taraudée 30.

La tige filetée 32 est réalisée en matériau plastique, par exemple un matériau thermoplastique tel que l'acrylonitrile butadiène styrène (ABS). Avantageusement, la tige filetée 32 est réalisée venue de matière en une seule pièce avec le porte-gicleur 26. Elle peut aussi être surmoulée.

En variante, la tige filetée 32 peut aussi être réalisée en un matériau métallique, qui peut être surmoulé avec le porte-gicleur, sous forme d'un insert dans le moule.

Le montage par emboîtement élastique est réalisé par insertion axiale selon la direction "A" de la tige filetée 32 dans la douille taraudée 30. Les languettes 38 sont alors écartées progressivement les unes des autres radialement vers l'extérieur de manière à permettre le passage axial du filetage 48 de la tige filetée 32 jusqu'à sa position montée. L'écartement est obtenu par glissement des filets du taraudage 42 de la douille taraudée 30 sur les filets du filetage 48 de la tige filetée 32.

L'élasticité et la flexibilité des languettes 38 dépendent de la profondeur axiale des fentes 40 de la douille taraudée 30. Chaque fente 40 est réalisée de manière suffisamment profonde pour permettre de réaliser le montage élastique du cache 28 sur le porte-gicleur 26 avec un effort de montage appliqué manuellement selon la direction "A".

Par ailleurs, lorsque le cache 28 est monté sur le porte-gicleur 26, les languettes 38 sont conçues pour être suffisamment rigides pour empêcher un démontage du cache 28 par arrachage axial, par application d'un effort d'arrachement opposé à l'effort de montage. Pour réussir un tel arrachement, l'effort d'arrachement devrait être très supérieur à l'effort de montage, et avantageusement très supérieur à l'effort qu'un homme est susceptible de fournir manuellement.

En effet, lorsque le cache 28 est monté sur le porte-gicleur 26, le filetage 48 de la tige filetée 32 sont directement en contact sur toute leur longueur avec le taraudage 42 de la douille taraudée 30. Il est alors impossible de commencer à retirer axialement la tige filetée 32 tant que les filets situés à l'extrémité supérieure de la douille taraudée 30 sont en prise avec les filets en vis-à-vis de la tige filetée 32.

Le filetage 48 de la tige filetée 32 et le taraudage 46 de la douille taraudée 30 permettent en revanche un démontage du cache 28 par dévissage par rapport au porte-gicleur 26 avec un couple de dévissage qu'un homme est susceptible de fournir manuellement.

Comme représenté à la figure 6, les filets de la douille taraudée 30 et de la tige filetée 32 présentent, en coupe axiale, un profil denté à dents triangulaires dont chacune comporte une face latérale supérieure 50, tournée vers l'extrémité supérieure libre 46 de la tige filetée 32, qui est inclinée vers le bas par rapport à un plan horizontal.

La face supérieure 50 fait office de rampe de guidage pour faciliter la flexion élastique vers l'extérieur des languettes 38 de la douille taraudée 30 lors de l'insertion de la tige filetée 32.

Avantageusement, toujours en coupe axiale, une face latérale inférieure 52 des filets de la douille taraudée 30 et de la tige filetée 32 s'étend dans un plan horizontal. La face inférieure 52 des filets permet de s'opposer au retrait par arrachage axial de la tige filetée 32 montée sans provoquer la moindre flexion élastique des languettes élastiques 38 de la douille taraudée 30.

En variante, la face inférieure 52 des filets de la douille taraudée 30 et de la tige filetée 32 est légèrement inclinée. Ainsi, une partie de l'effort d'arrachement axial est transmis à la languette 38 en effort radial d'écartement. Cependant, cet effort est insuffisant pour provoquer un fléchissement des languettes 38 suffisant pour dégager les filets d'extrémité supérieure de la tige filetée 32 des filets d'extrémité supérieure de la douille taraudée 30.

En outre, les premiers et deuxièmes moyens de fixation 30, 32 comportent des moyens d'indexation angulaire du cache 28 par rapport au porte-gicleur 26 autour de l'axe vertical "B" de la douille taraudée 30.

Plus particulièrement, dans l'exemple représenté aux figures, la tige filetée 32 comporte trois crans 54 dont chacun est destiné à recevoir le bord inférieur d'extrémité libre 36 d'une des trois languettes 38 de la douille taraudée 30 afin d'indexer angulairement le cache 28 par rapport au porte-gicleur 26 lors de son montage.

Les crans 54 sont ici délimités circonférentiellement par trois dents 56 qui s'étendent verticalement vers le haut depuis une collerette 58 qui entoure la base inférieure de la tige filetée 32.

En position montée, le bord inférieur d'extrémité libre 36 des languettes 38 est en butée axiale contre la collerette 58. A cet effet, un jeu axial est réservé entre l'extrémité supérieure libre 46 de la tige fileté 32 et le fond de la douille taraudée 30 afin d'assurer que le bord inférieur d'extrémité libre 36 des languettes 38 entre en contact avec la collerette 58.

Chaque dent 56 comporte une face verticale radiale de butée 59 qui s'oppose à la rotation de la douille taraudée 30 dans le sens du vissage par rapport à la tige filetée 32 lorsque le cache 28 est monté sur le porte-gicleur 26. Ainsi, lors de l'insertion de la tige filetée 32 dans la douille taraudée 30, il est possible d'ajuster l'indexation angulaire du cache 28 par rapport au porte-gicleur 26 en effectuant une rotation de la douille taraudée 30 par rapport à la tige filetée 32 dans le sens du vissage pour amener les languettes 38 en butée circonférentielle contre la face de butée 59 des dents 56 associées.

Les dents 56 comportent en outre une face opposée formant une rampe 60 radiale inclinée verticalement vers le haut selon le sens de rotation de dévissage. La rampe 60 est suffisamment inclinée pour pousser axialement les filets de la tige filetée 32 contre les filets de la douille taraudée 30 lors du dévissage pour former un couple résistant par frottement à l'encontre du couple de dévissage en début de démontage par dévissage du cache 28.

Ainsi, le bord inférieur d'extrémité libre 36 des languettes 38 est maintenu en position dans les crans 54 associés tant que l'intensité du couple de dévissage n'est pas suffisante pour surmonter le couple résistant.

Selon une variante non représentée de l'invention, les dents 56 s'étendent radialement depuis un tronçon intermédiaire qui est agencé entre la base inférieure et le filetage 48 de la tige filetée 32. Dans ce cas, en position montée, l'extrémité supérieure libre 46 de la tige filetée 32 est en butée axiale contre le fond de la douille taraudée 30, un jeu axial de montage étant réservé entre le bord inférieur d'extrémité libre 36 des languettes 38 et la collerette 58 de la tige filetée 32.

Lors du montage du cache 28, le cache 28 est agencé verticalement au droit du porte-gicleur 26, comme illustré à la figure 3. Puis l'effort de montage est appliqué vers le bas selon la direction "A". La tige filetée 32 est alors engagée verticalement dans la douille taraudée 30.

Les filets d'extrémité supérieure du filetage 48 de la tige filetée 32 entrent en contact avec les filets d'extrémité inférieur du taraudage 42 des languettes 38, provoquant l'écartement radial élastique des languettes axiales 38 de la douille taraudée 30 de manière que les filets de la tige filetée 32 "sautent" axialement les filets complémentaire de la douille taraudée 30.

En réalisant cette opération suffisamment vite, les languettes 38 ne reviennent pas dans leur position de repos entre chaque "saut" de filet. Au contraire, grâce à l'élan du coulissement du cache 28, les languettes 38 sont de plus en plus écartées les unes des autres au fur et à mesure de l'insertion de la tige filetée 32 jusqu'à ce que le bord inférieur d'extrémité libre 36 des languettes 38 soit engagé dans les crans 54 associés et en butée contre la collerette 58 de la tige filetée 32.

Les languettes 38 sont alors rappelées dans leur position de repos de manière que le filetage 48 de la tige filetée 32 soit en prise avec le taraudage 42 de la douille taraudée 30. Le cache 28 est ainsi monté sur le porte-gicleur 26.

Le montage du cache 28 est ainsi très rapide car il n'est pas nécessaire que la douille taraudée 30 soit vissée par plusieurs tours sur la tige filetée 32.

Puis, lors du démontage, un couple de dévissage dans le sens du dévissage est appliqué au cache 28 de manière à faire tourner le cache 28 par rapport au porte-gicleur 26. Le bord inférieur d'extrémité libre 36 de chaque languette 38 est alors guidée sur la rampe 60 de la dent 56 associée. La rampe 60 pousse alors axialement vers le haut les filets du taraudage 42 de la douille taraudée 30 contre les filets du filetage 48 de la tige filetée 32.

L'intensité du couple de dévissage est alors augmentée pour permettre de déformer élastiquement les filets et pour surmonter le couple résistant causé par le frottement du filetage 48 de la tige filetée 32 contre le taraudage 42 de la douille taraudée 30.

Lorsque le bord inférieur d'extrémité libre 36 des languettes 38 a franchi le sommet de la rampe 60, le dévissage peut être continué avec une intensité beaucoup plus faible du couple de dévissage.

Grâce à cette résistance au dévissage en début de démontage, des voleurs sont susceptibles d'abandonner toute tentative de démontage par dévissage de peur de casser le cache 28.

En outre, cette résistance au dévissage permet d'assurer que le cache 28 ne sera pas dévissé, ce serait-ce que partiellement, sous l'effet du vent, par exemple lorsque le dispositif de nettoyage 20 est utilisé alors que le véhicule automobile 10 roule à grande vitesse, ni sous l'effet d'un choc léger subi par le véhicule.

Selon une variante non représentée de l'invention, la douille taraudée est portée par le porte-gicleur tandis que la tige filetée est portée par le cache.

## Revendications

1. Agencement pour le montage d'un cache (28) sur un dispositif de nettoyage de glace (20), notamment de projecteur (12) de véhicule automobile (10), qui comporte :
- un porte-gicleur (26) destiné à être monté sur un vérin escamotable (22) dans une ouverture (18) de la carrosserie (16) du véhicule automobile (10) ;
- un cache (28) qui est susceptible d'obturer l'ouverture (18) de la carrosserie (16) lorsque le vérin (22) est escamoté, et qui est destiné à être monté sur le porte-gicleur (26) ;
- des moyens pour fixer de manière démontable le cache (28) sur le porte-gicleur (26) par emboîtement élastique de premiers moyens de fixation (30) du cache (28) dans des deuxièmes moyens de fixation (32) de formes complémentaires du porte-gicleur (26) ;
**caractérisé en ce que** l'un des moyens de fixation est formé par une douille taraudée (30) et l'autre des moyens de fixation est formé par une tige filetée (32), l'un des moyens de fixation étant fendu axialement depuis son bord d'extrémité libre (36) en au moins deux languettes axiales (38), la distance entre les extrémités des deux languettes pouvant varier radialement par flexion élastique, de manière à permettre l'emboîtement axial dans la douille (30) par écartement du filetage de la tige du taraudage de la douille.

2. Agencement selon la revendication précédente, **caractérisé en ce que** le cache (28) est destiné à être démonté du porte-gicleur (26) par application d'un couple de dévissage de la tige filetée (32) par rapport à la douille taraudée (30).

3. Agencement selon la revendication précédente, **caractérisé en ce que** les premiers et deuxièmes moyens de fixation (30, 32) comportent des moyens (54, 56) d'indexation angulaire du cache (28) par rapport au porte-gicleur (26).

4. Agencement selon l'une des revendications précédentes, **caractérisé en ce que** la douille taraudée (30) est fendue axialement depuis son bord d'extrémité libre (36) en au moins deux languettes axiales (38) susceptibles d'être écartées radialement l'une de l'autre par flexion élastique, et **en ce que** la tige filetée (32) est susceptible d'être emboîtée axialement dans la douille (30) par écartement élastique des languettes axiales (38) de la douille taraudée (30).

5. Agencement selon la revendication précédente, **caractérisé en ce que** la tige filetée (32) comporte au moins deux crans (54) destinés à recevoir le bord d'extrémité axiale libre (36) des languettes (38) de la douille (30) afin d'indexer angulairement le cache (28) par rapport au porte-gicleur (26).

6. Agencement selon la revendication précédente, **caractérisé en ce que** les crans (54) sont délimités circonférentiellement par des dents (56) dont chacune comporte une face axiale de butée (59) qui s'oppose à la rotation de la douille (30) dans le sens du vissage par rapport à la tige filetée (32) lorsque le cache (28) est monté sur le porte-gicleur (26).

7. Agencement selon la revendication précédente, **caractérisé en ce que** les dents (56) comportent une face opposée à la face axiale et formant une rampe radiale (60), notamment de manière à pousser axialement le filetage (48) de la tige filetée (32) contre le taraudage (42) de la douille taraudée (30) lors du dévissage pour former un couple résistant par frottement à l'encontre du couple de dévissage lors du démontage du cache (28).

8. Agencement selon l'une quelconque des revendications 4 à 7, **caractérisé en ce que** les filets de la douille taraudée (30) et de la tige filetée (32) présentent en coupe axiale un profil à dents triangulaires comportant une face latérale (50) qui est tournée vers l'extrémité libre (46) de la tige filetée (32) et qui est inclinée, notamment pour faciliter la flexion élastique des languettes (38) de la douille taraudée (30) lors du montage par insertion axiale.

9. Agencement selon la revendication précédente, **caractérisé en ce que** les filets de la douille taraudée (30) et de la tige filetée (32) présentent en coupe axiale un profil à dents triangulaires comportant une face opposée (52) à la face latérale (50) qui est tournée vers la base de la tige filetée (32) et qui s'étend dans un plan radial, notamment de manière à s'opposer au retrait de la tige filetée (32) montée par arrachage axial.

10. Agencement selon l'une quelconque des revendications précédentes, **caractérisé en ce que** la douille taraudée (30) est réalisée en matériau plastique.

11. Agencement selon la revendication précédente, **caractérisé en ce que** la douille taraudée (30) forme les premiers moyens de fixation portés par le cache (28), et **en ce qu'**elle est réalisée venue de matière avec le cache (28).

12. Agencement selon l'une quelconque des revendications précédentes, **caractérisé en ce que** la tige filetée (32) est réalisée en matériau plastique ou en métal.

13. Agencement selon la revendication précédente, **caractérisé en ce que** la tige filetée (32) forme les deuxièmes moyens de fixation portés par le porte-gicleur (36), et **en ce qu'**elle est réalisée venue de matière avec le porte-gicleur (36).

## Claims

1. Arrangement for fitting of a shield (28) on a glass cleaning device (20), in particular for a motor vehicle (10) headlight (12), which comprises:
- a nozzle-holder (26) which is designed to be fitted on a retractable jack (22) in an opening (18) in the bodywork (16) of the motor vehicle (10);
- a shield (28) which can close the opening (18) in the bodywork (16) when the jack (22) is retracted, and which is designed to be fitted on the nozzle-holder (26);
- means for securing the shield (28) in a detachable manner on the nozzle-holder (26) by resilient fitting of first means (30) for securing the shield (28) in second securing means (32) with forms which are complementary to the nozzle-holder (26);
**characterised in that** one of the securing means is formed by a tapped bush (30), and the other one of the securing means is formed by a threaded rod (32), one of the securing means being slit axially from its free end (36) into at least two axial tongues (38), the distance between the ends of the two tongues being able to be varied radially by resilient flexure, such as to permit the axial fitting in the bush (30) by spacing the thread of the rod from the tapping of the bush.

2. Arrangement according to the preceding claim, **characterised in that** the shield (28) is designed to be detached from the nozzle-holder (26) by application of torque for unscrewing of the threaded rod (32) relative to the tapped bush (30).

3. Arrangement according to the preceding claim, **characterised in that** the first and second securing means (30, 32) comprise means (54, 56) for angular indexing of the shield (28) relative to the nozzle-holder (26).

4. Arrangement according to one of the preceding claims, **characterised in that** the tapped bush (30) is slit axially from its free end (36) into at least two axial tongues (38) which can be spaced radially from one another by resilient flexure, and **in that** the threaded rod (32) can be fitted axially in the bush (30) by resilient spacing of the axial tongues (38) from the tapped bush (30).

5. Arrangement according to the preceding claim, **characterised in that** the threaded rod (32) comprises at least two notches (54) which are designed to receive the free axial end (36) of the tongues (38) of the bush (30), in order to index the shield (28) angularly relative to the nozzle-holder (26).

6. Arrangement according to the preceding claim, **characterised in that** the notches (54) are delimited circumferentially by teeth (56), each of which comprises an axial stop surface (59) which opposes the rotation of the bush (30) in the direction of screwing, relative to the threaded rod (32), when the shield (28) is fitted on the nozzle-holder (26).

7. Arrangement according to the preceding claim, **characterised in that** the teeth (56) comprise a surface opposite the axial surface which forms a radial ramp (60), in particular such as to thrust the thread (48) of the threaded rod (32) axially against the tapping (42) of the tapped bush (30) during the unscrewing, in order to form resistant torque by friction against the unscrewing torque, during the detachment of the shield (28).

8. Arrangement according to any one of claims 4 to 7, **characterised in that** the threads of the tapped bush (30) and of the threaded rod (32) have in axial cross-section a profile with triangular teeth comprising a lateral surface (50) which faces the free end (46) of the threaded rod (32), and is inclined, in particular in order to facilitate the resilient flexure of the tongues (38) of the tapped bush (30) during the fitting by axial insertion.

9. Arrangement according to the preceding claim, **characterised in that** the threads of the tapped bush (30) and of the threaded rod (32) have in axial cross-section a profile with triangular teeth comprising a surface (52) opposite the lateral surface (50) which faces the base of the threaded rod (32), and extends on a radial plane, in particular such as to oppose the withdrawal of the threaded rod (32) fitted, by axial wrenching out.

10. Arrangement according to any one of the preceding claims, **characterised in that** the tapped bush (30) is made of plastic material.

11. Arrangement according to the preceding claim, **characterised in that** the tapped bush (30) forms the first securing means which are supported by the shield (28), and **in that** it is integral with the shield (28).

12. Arrangement according to any one of the preceding claims, **characterised in that** the threaded rod (32) is made of plastic or metal material.

13. Arrangement according to the preceding claim, **characterised in that** the threaded rod (32) forms the two securing means which are supported by the nozzle-holder (36), and **in that** it is integral with the nozzle-holder (36).

## Patentansprüche

1. Anordnung zur Montage einer Abdeckung (28) auf einer Scheibenreinigungsvorrichtung (20) insbesondere eines Scheinwerfers (12) eines Kraftfahrzeugs (10), mit:
- einem Spritzdüsenhalter (26), der zur Montage auf einem versenkbaren Zylinder (22) in einer Öffnung (18) der Karosserie (16) des Kraftfahrzeugs (10) bestimmt ist;
- einer Abdeckung (28), welche die Öffnung (18) der Karosserie (16) zu verschließen vermag, wenn der Zylinder (22) versenkt ist, und die zur Montage auf dem Spritzdüsenhalter (26) bestimmt ist;
- Mitteln zur lösbaren Befestigung der Abdeckung (28) auf dem Spritzdüsenhalter (26) durch elastisches Ineinanderstecken erster Befestigungsmittel (30) der Abdeckung (28) in komplementär geformte zweite Befestigungsmittel (32) des Spritzdüsenhalters (26);
**dadurch gekennzeichnet, dass** eines der Befestigungsmittel von einer Gewindebuchse (30) gebildet ist und das andere Befestigungsmittel von einem Gewindestift (32), wobei das eine Befestigungsmittel ausgehend von seinem freien äußeren Rand (36) axial in wenigstens zwei axiale Laschen (38) gespalten ist, wobei der Abstand zwischen den Enden der beiden Laschen durch elastisches Biegen radial veränderlich ist, um das axiale Einstecken in die Buchse (30) durch einen Abstand des Stiftgewindes vom Buchseninnengewinde zu ermöglichen.

2. Anordnung nach dem vorhergehenden Anspruch,
**dadurch gekennzeichnet, dass** die Abdeckung (28) dazu bestimmt ist, vom Spritzdüsenhalter (26) durch Aufbringen eines Drehmoments zum Abschrauben des Gewindestifts (32) bezüglich der Gewindebuchse (30) gelöst zu werden.

3. Anordnung nach dem vorhergehenden Anspruch,
**dadurch gekennzeichnet, dass** die ersten und zweiten Befestigungsmittel (30, 32) Mittel (54, 56) zum winkelgerechten Positionieren der Abdeckung (28) bezüglich des Spritzdüsenhalters (26) umfassen.

4. Anordnung nach einem der vorhergehenden Ansprüche,
**dadurch gekennzeichnet, dass** die Gewindebuchse (30) ausgehend von ihrem freien äußeren Rand (36) axial in wenigstens zwei axiale Laschen (38) gespalten ist, die durch elastisches Biegen radial auseinander gespreizt werden können, und dass der Gewindestift (32) durch elastisches Auseinanderspreizen der axialen Laschen (38) der Gewindebuchse (30) axial in die Buchse (30) eingesteckt zu werden vermag.

5. Anordnung nach dem vorhergehenden Anspruch,
**dadurch gekennzeichnet, dass** der Gewindestift (32) wenigstens zwei Einkerbungen (54) aufweist, die zur Aufnahme des freien axialen äußeren Rands (36) der Laschen (38) der Buchse (30) bestimmt sind, um die Abdeckung (28) bezüglich des Spritzdüsenhalters (26) winkelgerecht zu positionieren.

6. Anordnung nach dem vorhergehenden Anspruch,
**dadurch gekennzeichnet, dass** die Einkerbungen (54) umfangsseitig durch Zacken (56) begrenzt sind, die jeweils eine axiale Anschlagsseite (59) aufweisen, die sich der Drehung der Buchse (30) in Schraubrichtung bezüglich des Gewindestifts (32) widersetzt, wenn die Abdeckung (28) auf dem Spritzdüsenhalter (26) montiert ist.

7. Anordnung nach dem vorhergehenden Anspruch,
**dadurch gekennzeichnet, dass** die Zacken (56) eine Seite aufweisen, die der axialen Seite entgegengesetzt ist und eine radiale Rampe (60) bildet, insbesondere um das Gewinde (48) des Gewindestifts (32) beim Abschrauben axial gegen das Innengewinde (42) der Gewindebuchse (30) zu drücken, um ein Drehmoment zu erzeugen, das durch Reibung gegenüber dem Abschaubdrehmoment beim Lösen der Abdeckung (28) standhält.

8. Anordnung nach einem der Ansprüche 4 bis 7,
**dadurch gekennzeichnet, dass** die Gewinde der Gewindebuchse (30) und des Gewindestifts (32) im Axialschnitt ein dreieckszahnförmiges Profil aufweisen, mit einer Seitenfläche (50), die zum freien Ende (46) des Gewindestifts (32) gewandt ist und die geneigt ist, insbesondere um das elastische Biegen der Laschen (38) der Gewindebuchse (30) bei der durch axiales Einführen erfolgenden Montage zu erleichtern.

9. Anordnung nach dem vorhergehenden Anspruch,
**dadurch gekennzeichnet, dass** die Gewinde der Gewindebuchse (30) und des Gewindestifts (32) im Axialschnitt ein dreieckszahnförmiges Profil aufweisen, mit einer zur Seitenfläche (50) entgegengesetzten Seite (52), die zur Basis des Gewindestifts (32) gewandt ist und in einer radialen Ebene verläuft, insbesondere um sich einem Herausziehen des montierten Gewindestifts (32) durch axiales Herausreißen zu widersetzen.

10. Anordnung nach einem der vorhergehenden Ansprüche,
**dadurch gekennzeichnet, dass** die Gewindebuchse (30) aus Kunststoff ausgeführt ist.

11. Anordnung nach dem vorhergehenden Anspruch,
**dadurch gekennzeichnet, dass** die Gewindebuchse (30) die ersten, von der Abdeckung (28) getragenen Befestigungsmittel bildet, und dass sie mit der Abdeckung (28) einstückig ausgeführt ist.

12. Anordnung nach einem der vorhergehenden Ansprüche,
**dadurch gekennzeichnet, dass** der Gewindestift (32) aus Kunststoff oder aus Metall ausgeführt ist.

13. Anordnung nach dem vorhergehenden Anspruch,
**dadurch gekennzeichnet, dass** der Gewindestift (32) die zweiten, vom Spritzdüsenhalter (36) getragenen Befestigungsmittel bildet, und dass er mit dem Spritzdüsenhalter (36) einstückig ausgeführt ist.
